# EUROPEAN PATENT APPLICATION

(11) **EP 2 256 622 A1**
(43) Date of publication of application: **01.12.2010**
(21) Application number: 10009577.7
(22) Date of filing: 07.02.2002
(51) Int. Cl.: G06F 9/44

(54) **Method and apparatus for parallel distributed compilation**

(62) Divisional of application: 02002801.5
(71) Applicant: SAP AG, 69190 Walldorf (DE)
(72) Inventor: Stüfe, Thomas, 69190 Walldorf (DE)
(74) Representative: Müller-Boré & Partner Patentanwälte

(57) **Abstract**

Controlling a building process of a target program (230) with compiling source code modules (211, 212, 213) into object code modules (221, 222, 223) and linking the object code modules (221, 222, 223) to the target program (230), thereby in repetitions for all modules, triggering (01, 07, 13) for each module a pseudo-compiler (325) from a predefined scheduler (310) and acknowledging (03, 09, 15) receipt to the scheduler (310); triggering (02, 08, 14) a plurality of compilers (321, 322, 323) from the pseudo-compiler (325) to substantially compile (05, 11, 17) the source code modules (211, 212, 213) to the object code modules (221, 222, 223) in parallel; acknowledging (19, 20, 21) from the compilers (321, 322, 323) to a synchronizer (335); and triggering (22/23) a linker (330) from the scheduler (310) when the synchronizer (335) has received the acknowledgements (19, 20, 21) from the compilers (321, 322, 321).

## Description

### Field of the Invention

The present invention generally relates to data processing and, more particularly, relates to computer systems, computer programs, and methods that provide executable computer programs by compiling and linking.

### Background of the Invention

Software source code is written in programming languages such as C, C++, Pascal, or Java. A compiler converts the source code into object code; a linker converts the object code into executable code; at run-time, a processor executes the object code of the target program.

Modular techniques are common, and software building is a process of compiling source code modules to object code modules and linking the object code modules to the target program. This process automatically follows a predefined schedule. However, for business application software, the total processing time is measured in hours. For example, building SAP R/3 (SAP Aktiengesellschaft Walldorf (Baden)) requires between 8 to 24 hours (depending on hardware).

There is an ongoing need to improve software building techniques with reduced processing times.

### Summary of the Invention

The invention relates to a computer-implemented method for controlling a building process of a target program, the building process with compiling source code modules into object code modules and linking the object code modules to the target program, the method comprises the following steps:
in repetitions for all modules, triggering for each module a pseudo-compiler from a predefined scheduler and acknowledging receipt to the scheduler;
triggering a plurality of compilers from the pseudo-compiler to substantially compile the source code modules to the object code modules in parallel; acknowledging from the compilers to a synchronizer; and triggering a linker from the scheduler when the synchronizer has received the acknowledgements from the compilers.

Preferably, the total number of triggering commands is counted and communicated to the synchronizer. Preferably, the pseudo-compiler buffers trigger commands.

Preferably, the pseudo-compiler buffers trigger commands according to definitions selected from the group of: according to the size of the source modules to be compiled, according to an expected compiling duration for each compiler, to the next available compiler, according to a first-in-first-out (FIFO) scheme, according to a last-in-first-out (LIFO) scheme, and according to a head or stack configuration.

The invention also relates to a Computer program comprising program code means for performing all the method steps the program is run on a computer. In other words, a computer program product comprises program code means stored on a computer readable medium for performing the method when the program is run on a computer.

The invention also relates to a computer for controlling a building process of a target program, wherein source code modules are compiled into object code modules and object code modules are linked to the target program. The computer comprises a pseudo-compiler that is triggered from a predefined scheduler and that acknowledges to the scheduler; a plurality of compilers triggered from the pseudo-compiler to compile the source code modules to the object code modules substantially in parallel, the compilers acknowledging to a synchronizer; and a linker triggered from the scheduler when the synchronizer has received the acknowledgements from the compilers.

Preferably, the pseudo-compiler has a counter for counting the number of triggering commands and communicating this number to the synchronizer. Preferably, the pseudo-compiler buffers trigger commands.

### Brief Description of the Drawings

FIG. 1 illustrates a computer system;
FIG. 2 illustrates an overview about code modules and service components;
FIG. 3 illustrates an overview about code modules and service components for a first embodiment;
FIG. 4 illustrates a compiler trigger queue in a first-in-first-out (FIFO) configuration for a second embodiment;
FIG. 5 illustrates a trigger buffer;
FIG. 6 illustrates a pseudo-compiler and a synchronizer and;
FIG. 7 illustrates a simplified flow chart diagram for a method of the present invention.

### General Description of a Computer System

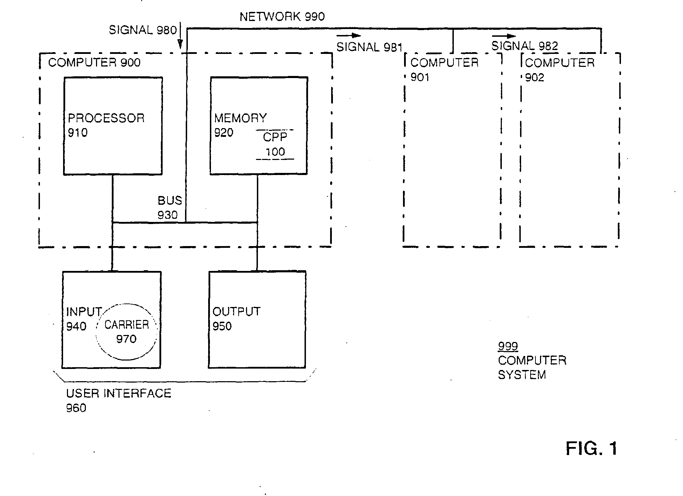

FIG. 1 illustrates a simplified block diagram of the inventive computer network system 999 having a plurality of computers 900, 901, 902 (or 90q, with q=0...Q-1, Q any number).

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900. Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion. Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals. Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc. Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card. Computer and program are closely related. As used hereinafter, phrases, such as "the computer provides" and "the program provides", are convenient abbreviations to express actions by a computer that is controlled by a program.

### Brief Description of the Drawings

For convenience of explanation, the computers in FIG. 1 are assigned to the following functionality: compiling and linking computer 900 for converting the source code to the target program according to a method of the invention; compiling computer 901 for optionally compiling; and executing computer 902 for executing the target program at runtime. Unless specified otherwise, method steps are performed on computer 900 under control of computer program product (CPP) 100.

The description uses well-known conventions, such as:
- C++ as exemplary programming language for the source code,
- writing and reading code to and from files that have names with 3-letter extensions (e.g., X.C++, TARGET.exe),
- referring to computer instructions as "modules" and "components".

Based on the description herein, persons of skill in the art can use other conventions without departing from the scope of the invention.

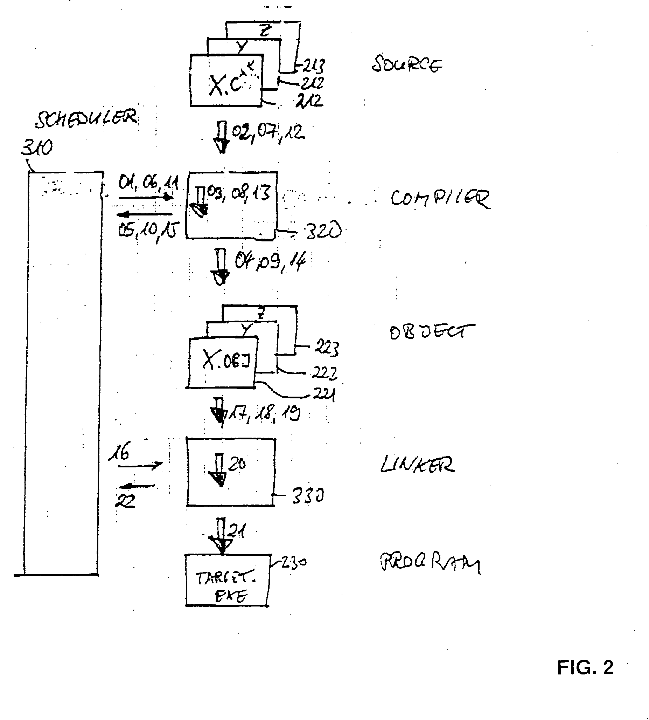

FIG. 2 illustrates an overview about code modules 211-213, 221-223, 230 and service components 310, 320, 330 on computer 900.

### Code modules are classified into

- source code modules 211 (X.C++), 212 (Y.C++), 213 (Z.C++),
- object code modules 221 (X.OBJ), 222 (Y.OBJ), 223 (Z.OBJ), and
- target program 230 (TARGET.exe), also in object code. Exemplary filenames are given in parenthesis with a module identifier (e.g., X) and a code identifier (e.g., C++). For convenience, the word "code" is sometime left out.

According to their main actions (two-digit numbers), the service components are classified into:
- scheduler (S, "maker") 310 for triggering 01, 06, 11, 16 (i.e. requesting),
- compiler (C) 320 for reading 02, 07, 12, compiling 03, 08, 13, writing 04, 09, 14, acknowledging 05, 10, 15, and
- linker (L) 330 for reading 17, 18, 19, linking 20, writing 21, acknowledging 22.

FIG. 2 indicates a preferred action order by arrows (1-22). Double-line arrows stand for actions that involve code: reading and writing, compiling and linking; single-line arrows stand for actions that control operations: triggering and acknowledging.

Scheduler 310 triggers compiler 320 and linker 330 according to a predefined schedule with the module identifiers (i.e. X, Y, Z). One triggering action is referred to as "trigger command" ("request"). Compiler 320 and linker 330 acknowledge completion to scheduler 310 (i.e. indicate that compiling or linking has been completed).

Compiler 320 reads source code from source modules 211, 212, 213 (e.g., X.C++), compiles source code to object code, and writes object code to the object modules 221, 222, 223 (e.g., X.OBJ).

Linker 330 reads object modules 221, 222, 223 (i.e., X.OBJ, Y.OBJ and Z.OBJ) and links them to target program 230 (i.e. TARGET.exe).

By using processor 910 of computer 900 as the only processor, compiling has to be performed sequentially. In simplified language, the actions are:
- 01: S triggers C to compile X
- 02: C reads source from X.C++
- 03: C compiles
- 04: C writes object to X.OBJ
- 05: C acknowledges
- 06: S triggers C to compile Y
- 07: C reads source from Y.C++
- 08: C compiles
- 09: C writes object to Y.OBJ
- 10: C acknowledges
- 11: S triggers C to compile Z
- 12: C reads source from Z.C++
- 13: C compiles
- 14: C writes object to Z.OBJ
- 15: C acknowledges
- 16: S triggers L to link X, Y and Z
- 17: L reads X.OBJ
- 18: L reads Y.OBJ
- 19: L reads Z.OBJ
- 20: L links X.OBJ, Y.OBJ and Z.OBJ
- 21: L writes to TARGET.exe
- 22: L acknowledges.

Scheduler 310 has instructions in a schedule file ("make file"), for example, for action 1 (trigger C to compile X), action 5 (wait for acknowledgement), action 6 (trigger C to compile Y) and so on.

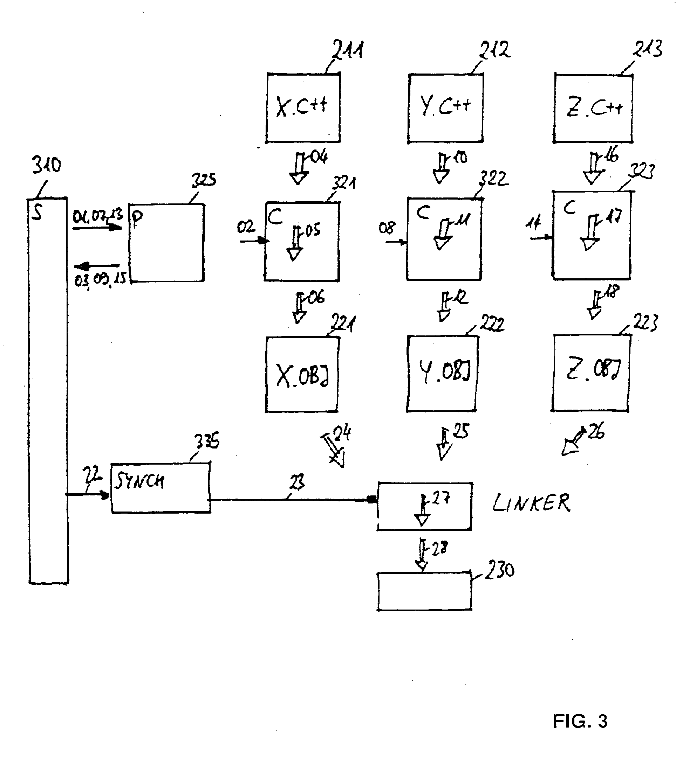

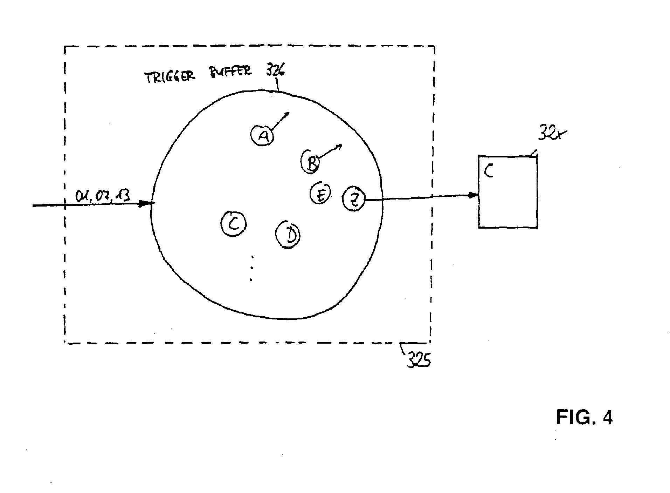

Attempts to speed up the action (e.g., by operations in parallel) face several technical problems. As known in the art, linker 330 evaluates object code for some or all modules (i.e. X, Y and Z) simultaneously. Therefore, changing the schedule (e.g., compile X, compile Y, link X and Y, compile Z, link XY with Z) could be applied to modules with no interaction. Also, compiling sometimes fails (e.g., due to syntax errors in source code). Improvements are explained in the following. Disregarding compiler errors, the first embodiment of the present invention uses a pseudo-compiler that triggers parallel compilers (FIG. 3), the second embodiment uses buffers (FIG. 4, e.g., FIFO with queues) for temporarily storing trigger commands, the third embodiment adds error detection functionality, the fourth embodiment accommodates a variable, but initially unknown number of modules.

FIG. 3 illustrates an overview about code modules 211-213, 221-223, 230 (as in FIG. 2) and service components 310, 321, 322, 323, 325, 330, 335 on computer 900. Illustration conventions follow FIG. 2. Compiler 320 (cf. FIG. 2) has been replaced by pseudo-compiler (P) 325 that triggers compilers 321, 322, 323 to operate substantially in parallel. Linker 330 remains unchanged. Synchronizer 335 is added.

Persons of skill in the art can distribute compilers 321, 322, 323 to separate computers (e.g. computers 900 and 901) or to process the compilers by a multi-tasking operating system on a single computer.

It is an advantage that pseudo-compiler 325 appears to scheduler 310 like compiler 320. It is not required to change the schedule or to change triggering or acknowledging.

In operation, scheduler 310 triggers 01 pseudo-compiler 325 to compile X. Pseudo-compiler 321 triggers 02 compiler 321. Substantially simultaneously, (i) pseudo-compiler 325 acknowledges 03 to scheduler 310 and (ii) compiler 321 starts to read 04 source module 211, compile 05, and write 06 object module 221.

For scheduler 310, it appears that compiling has been completed so that scheduler 310 triggers 07 pseudo-compiler 325 to compile Y. Similar, pseudo-compiler 325 triggers 08 compiler 322. Substantially simultaneously, (i) pseudo-compiler 325 acknowledges 09 to scheduler 310 and (ii) compiler 322 starts to read 10 source module 212, compile 11, and write 12 object module 222.

Again, for scheduler 310, it appears that compiling has been completed so that scheduler 310 triggers 13 pseudo-compiler 325 to compile Z. Similar, pseudo-compiler 325 triggers 14 compiler 323. Substantially simultaneously, (i) pseudo-compiler 325 acknowledges 15 to scheduler 310 and (ii) compiler 323 starts to read 16 source module 213, compile 17, and write 18 object module 223.

In other words, pseudo-compiler 325 uses serial schedule to operate parallel compilers. Compilers 321, 322, 323 independently compile 05, 11, 17 and acknowledge 19, 20, 21 to synchronizer 335.

Scheduler 310 and linker 330 substantially interact as in FIG. 2. Synchronizer 335 enhances this interaction. Synchronizer 335 enables scheduler 310 to trigger linker 330 or disables it. In other words, synchronizer 335 either forwards trigger commands and blocks them. Preferably, when compilers 321, 322, 323 all have acknowledged 19, 20, 21 (events related by logical AND), scheduler 310 triggers 22/23 linker 330. Linker 330 reads 24, 25, 26 object modules 221, 222, 223, links 27 them and writes 28 target program 230 (cf. FIG. 2). Persons of skill in the art can modify the service components. For example, linker 330 and synchronizer 335 can provided like a pseudo-linker that appears to scheduler 310 as being a linker (cf. FIG. 2). Pseudo-compiler 325 in combination with synchronizer 335 both operate like a dispatcher that organizes parallel code processing (compiling/linking) from a serial schedule.

Usually, compilers 321, 322, 323 need different time intervals to complete compiling 05, 11, 17. These differences are caused, for example, by different sizes of modules 211, 212, 213 or by different compiler environments. In order to reduce idle times, the following second embodiment of the invention uses buffers.

FIGS. 4-5 illustrates buffers 326, 327, respectively that are part of pseudo-compiler 325. Trigger commands (from scheduler 310) are symbolized by letter symbols A, B, ... T, U, V, W, X, Y, Z that identify source modules to be compiled.

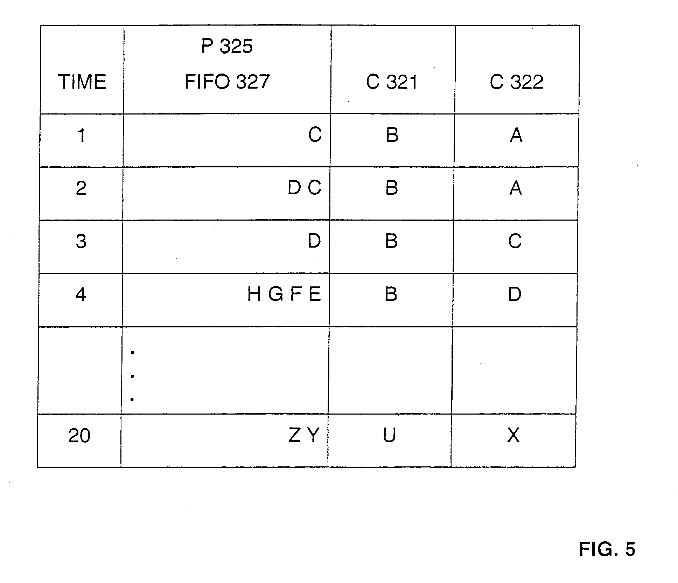

Buffer 326 can forward the commands (arrow symbols) as predefined, for example,
- according to the size of the source modules to be compiled,
- according to an expected compiling duration for each compiler,
- to the next available compiler,
- according to a first-in-first-out (FIFO) scheme (cf. FIG. 5),
- according to a last-in-first-out (LIFO) scheme, or
- in a head or stack configuration.

FIG. 4 illustrates buffer 326 that stores trigger commands (01, 07, 13 cf. FIG. 3) at random and that further triggers compilers (C) 321, 322 or 323 (illustrates as 32x). Pseudo-compiler 325 is symbolized by a dashed frame.

FIG. 5 illustrates the compiler trigger buffer in a first-in-first-out (FIFO) configuration. Trigger A arrives first. The illustrations assume to buffer the triggers; the modules can be buffered as well. Waiting triggers are temporarily stored in a queue. The figure has the form of a table; the columns indicate:
- consecutive time points
- FIFO with triggers arriving on the left,
- indication of modules currently compiled by compiler 321, and
- indication of modules currently compiled by compiler 322.

At time point 1, triggers for modules A and B have been forwarded through the FIFO so that compilers 322 and 321 compile modules A and B, respectively. Trigger C is in the FIFO.

At time point 2, trigger D has arrived; compilers 321 and 322 are still busy.

At time point 3, compiler 321 is still compiling module B, compiler 322 is compiling C, D is in the FIFO.

At time point 4, compiler 321 is still compiling module B, compiler 322 is compiling D, triggers H, G, F, E are waiting in the FIFO.

At the next time points, further triggers arrive, compilers 321 and 322 operate on further modules.

At time point 20, compiler 321 and 322 compile modules U and X, respectively; the last triggers Y and Z are in the FIFO.

Likewise, persons of skill in the art can provide an acknowledge queue that temporarily stores acknowledgements (cf. 19, 20, 21 in FIG. 3) to synchronizer.

Considering compiling and linking errors, the above embodiments are further improved by a third embodiment. Error handling functionality is optionally applied to pseudo-compilers, compilers, synchronizer and linker. For example, acknowledging can be delayed until compiling is completed without errors. Also, compiling modules that have errors can be shifted to a time when human interaction is available (e.g., in an overnight schedule to the next morning).

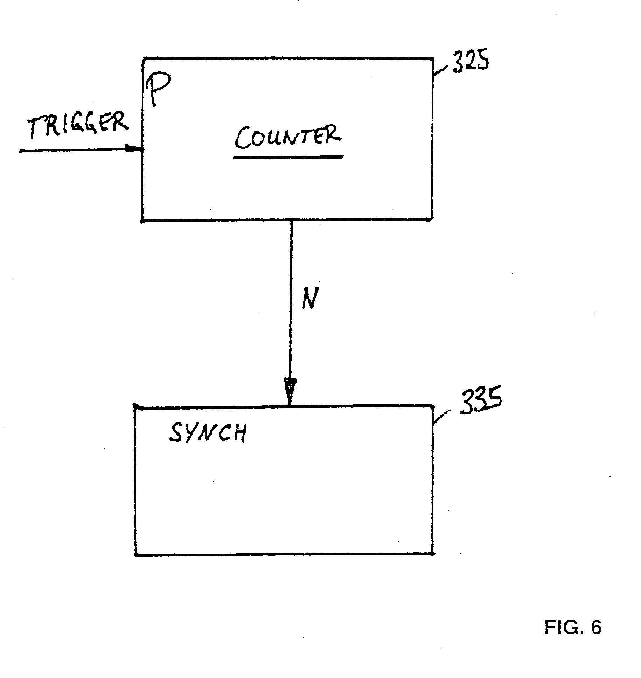

FIG. 6 illustrates pseudo-compiler 325 and synchronizer 335 for a fourth embodiment. Optionally, pseudo-compiler 325 counts the total number N of triggering commands (incoming arrow) and communicates N to synchronizer 335 (outgoing arrow). This is convenient for a scenario with a variable number of modules.

While in the example of FIG. 3, the number of modules being the number of trigger commands is N = 3; in the example of FIG. 5, N = 26 commands stand for A to Z. Counting however, makes compiling and linking more flexible.

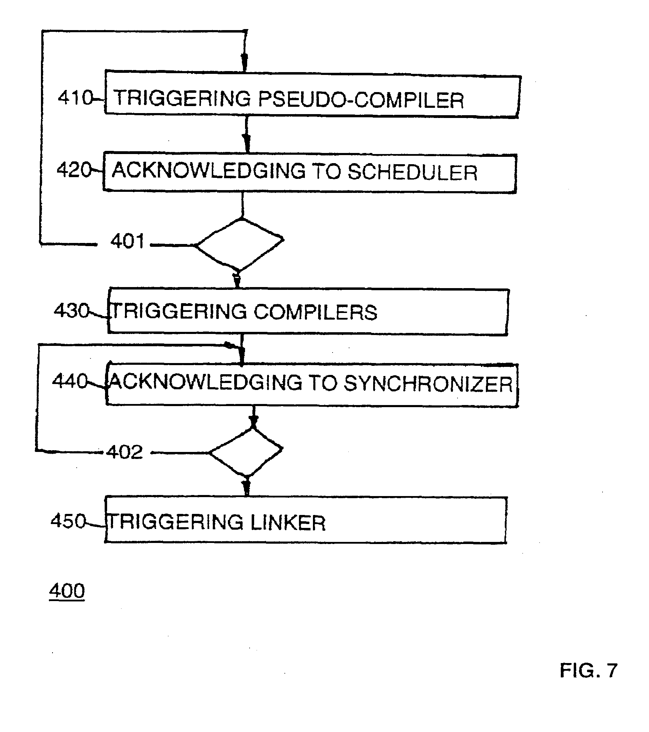

FIG. 7 illustrates a simplified flow chart diagram for computer-implemented method 400 of the present invention. Method 400 for controlling a building process of target program 230 (with compiling source code modules 211, 212, 213 into object code modules 221, 222, 223 and linking object code modules 221, 222, 223 to target program 230) comprises triggering 410 pseudo-compiler, acknowledging 420 to scheduler, triggering 430 compilers, acknowledging 440 to synchronizer; and triggering 450 linker. Steps 410, 420 as well as step 440 are repeated for a plurality of modules/compilers (indicated by query 401, 402).

In step 410, predefined scheduler 310 triggers 01, 07, 13 each module of pseudo-compiler 325. In step 420, pseudo-compiler 325 acknowledges 03, 09, 15 receipt to scheduler 310. In step 430, pseudo-compiler 325 triggers 02, 08, 14 a plurality of compilers 321, 322, 323 to compile 05, 11, 17 source code modules 211, 212, 213 to object code modules 221, 222, 223 substantially in parallel. In step 440, compilers 321, 322, 323 acknowledge 19, 20, 21 to synchronizer 335. In step 450, scheduler 310 triggers 22/23 linker 330 when the synchronizer 335 has received acknowledgements 19, 20, 21 from compilers 321, 322, 321.

Preferably (cf. FIG. 6), the total number N of triggering commands 01, 07, 13 is counted and communicated to synchronizer 335; and pseudo-compiler 325 buffers trigger commands (cf. FIGS. 4-5).

The invention is now summarized as computer 900 for controlling a building process of target program 230, wherein source code modules 211, 212, 213 are compiled into object code modules 221, 222, 223 and object code modules 221, 222, 223 are linked to the target program 230. The elements of computer 900 are:
pseudo-compiler 325 that is triggered 01, 07, 13 from predefined scheduler 310 and that acknowledges 03, 09, 15 to the scheduler 310; a plurality of compilers 321, 322, 323 triggered 02, 08, 14 from pseudo-compiler 325 to compile 05, 11, 17 source code modules 211, 212, 213 to object code modules 221, 222, 223 substantially in parallel, compilers 321, 322, 323 acknowledging 19, 20, 21 to synchronizer 335; and linker 330 triggered 22/23 from scheduler 310 when synchronizer 335 has received the acknowledgements 19, 20, 21 from compilers 321, 322, 321.

### References

- 01, 02, ...: actions
- 100: computer program product (CPP)
- 211, 212, 213: source code module (C++)
- 221, 222, 223: object code module
- 230: target program
- 310: scheduler (S)
- 320: compiler (C) (sequential operation)
- 321, 322, 323: compiler (C) (parallel operation)
- 325: pseudo compiler (P)
- 326, 327: buffer
- 330: linker (L)
- 335: synchronizer (SYNCH)
- 4xx: method and method steps
- 9xx: computer and computer elements

## Claims

1. Computer-implemented method (400) for controlling a building process of a target program (230), the building process with compiling source code modules (211, 212, 213) into object code modules (221, 222, 223) and linking the object code modules (221, 222, 223) to the target program (230),
said method being suitable to be performed on a computer comprising a pseudo-compiler (325), a scheduler (310), a plurality of compilers (321, 322, 323), to a synchronizer (335), and a linker (330),
the method (400) comprising the following steps:
in repetitions for all modules (401), triggering (410, 01, 07, 13) for each module the pseudo-compiler (325) from the predefined scheduler (310) and acknowledging (420, 03, 09, 15) receipt to the scheduler (310) by the pseudo-compiler (325), wherein the pseudo-compiler (325) appears to the scheduler (310) as a compiler;
triggering (430, 02, 08, 14) the plurality of compilers (321, 322, 323) from the pseudo-compiler (325) to independently compile (05, 11, 17) the source code modules (211, 212, 213) to the object code modules (221, 222, 223) in parallel;
acknowledging (440, 19, 20, 21) from the compilers (321, 322, 323) to the synchronizer (335); and
triggering (450, 22/23) the linker (330) from the scheduler (310) when the synchronizer (335) has received the acknowledgements (19, 20, 21) from the compilers (321, 322, 321).

2. The method (400) of claim 1, wherein the total number (N) of triggering commands (01, 07, 13) is counted and communicated to the synchronizer (335).

3. The method (400) of claim 1, wherein the pseudo-compiler (325) buffers trigger commands.

4. The method (400) of claim 3, wherein the pseudo-compiler (325) buffers trigger commands according to definitions selected from the group of:
according to the size of the source modules to be compiled,
according to an expected compiling duration for each compiler,
to the next available compiler,
according to a first-in-first-out (FIFO) scheme,
according to a last-in-first-out (LIFO) scheme, and
according to a head or stack configuration.

5. Computer program product (100) comprising program code means stored on a computer readable medium (970) for performing the method of any one of the claims 1 to 4 when the program is run on a computer.

6. Computer (900) for controlling a building process of a target program (230), wherein source code modules (211, 212, 213) are compiled into object code modules (221, 222, 223) and object code modules (221, 222, 223) are linked to the target program (230), the computer (900) comprising:
a pseudo-compiler (325) that is triggered (01, 07, 13) from a predefined scheduler (310) and that acknowledges (03, 09, 15) to the scheduler (310), wherein the pseudo-compiler (325) appears to the scheduler (310) as a compiler;
a plurality of compilers (321, 322, 323) triggered (02, 08, 14) from the pseudo-compiler (325) to independently compile (05, 11, 17) the source code modules (211, 212, 213) to the object code modules (221, 222, 223) in parallel, the compilers (321, 322, 323) acknowledging (19, 20, 21) to a synchronizer (335); and
a linker (330) triggered (22/23) from the scheduler (310) when the synchronizer (335) has received the acknowledgements (19, 20, 21) from the compilers (321, 322, 321).

7. The computer (900) of claim 6, wherein the pseudo-compiler has a counter for counting the number (N) of triggering commands (01, 07, 13) and communicating this number (N) to the synchronizer (335).

8. The computer (900) of claim 6, wherein the pseudo-compiler (325) buffers trigger commands.
